# EUROPEAN PATENT SPECIFICATION

(11) **EP 0 560 555 B1**
(45) Date of publication and mention of the grant of the patent: **05.02.1997**
(21) Application number: 93301736.0
(22) Date of filing: 08.03.1993
(51) Int. Cl.: C03C 3/076, C03C 3/078, C03C 3/095

(54) **Glass compositions**
Glaszusammensetzungen
Compositions en verre

(30) Priority: 11.03.1992 GB 9205217; 12.06.1992 GB 9212494
(43) Date of publication of application: 15.09.1993
(73) Proprietor: THE BRITISH GLASS MANUFACTURERS CONFEDERATION, Sheffield S10 2UA (GB)
(72) Inventor: Copley, Geoffrey John, c/o The British Glass, Sheffield S10 2UA (GB); Dalton, David Alan, c/o The British Glass, Sheffield S10 2UA (GB); Bentley, Jonathon Richard, c/o The British Glass, Sheffield S10 2UA (GB)
(74) Representative: Long, Edward Anthony

(56) References cited:
- EP-A- 0 564 802
- DE-B- 1 180 775
- FR-A- 2 540 857
- GB-A- 804 451
- GB-A- 2 121 783
- US-A- 3 677 960
- CHEMICAL ABSTRACTS, vol. 100, no. 20, 14 May 1984, Columbus, Ohio, US; abstract no. 160937x, page 271 ; & JP-A-59 018 131 (JAPAN OPTICS CO., LTD.) 31 January 1984
- JOURNAL OF RESEARCH OF THE NATIONAL BUREAU OF STANDARDS, A. PHYSICS AND CHEMISTRY vol. 61, no. 2 , August 1958 , WASHINGTON US pages 89 - 94 E.H.HAMILTON ET AL. 'Properties of Sodium Titanium Silicate Glasses'
- DATABASE WPI Section Ch, Week 8436, Derwent Publications Ltd., London, GB; Class L, AN 84-224478 & SU-A-1 066 950 (ISMATOV) 15 January 1984

## Description

This invention relates to glass compositions and to articles manufactured from such glass compositions.

The invention relates particularly, but not exclusively, to crystal glassware. Whilst lead crystal glass has been in extensive use for many years for articles such as decanters, drinking glasses and other articles for holding beverages for human consumption and, in the case of decanters, as packaging for longer term storage, the potential toxicity of lead and compounds of lead has resulted in attempts to eliminate the lead content. At the same time, the optical properties which confer the aesthetic qualities of traditional lead glass compositions, and the properties and economics needed for the manufacture of the glass and its products, must be retained. For the traditional lead crystal glass industry, it is also required that the glass should be capable of being worked, that is formed into articles, by hand as well as by machine.

Lead compounds have been used as additives for over three hundred years because of their ability to impart the necessary thermal, optical, mechanical and chemical properties to glasses with economically attainable melting temperatures. Lead compounds also impart a gradual increase in viscosity, as the temperature is reduced to permit the hand working of the glass into the end products, that is, in glass-making terminology, a longer working range. The glasses must also be capable of being cut, ground and polished.

It is known that certain elements and compounds will confer some of the desired properties to an alkali silicate glass. Optical glasses in the region of lanthanum crown have high refractive indices, but low dispersion. Barium compounds are being used by some manufacturers as an alternative to lead in crystal glass manufacture, but the refractive indices and dispersions are much inferior to lead crystal glass. Barium and barium compounds, with the exception of sulphate, are also toxic. Zinc compounds have been used in the manufacture of zinc crystal glasses, but they do not increase refractive index or dispersion significantly above that of the base glass. Titania increases the refractive index and dispersion of all glasses, but is difficult to incorporate without introducing crystallisation and colour, and the glasses are not amenable to hand forming.

In DE-B-1180775 is described glass compositions comprising 50 - 75 wt.% Si0₂, 12 - 20 wt.% Na20 and at least 2 wt.% of one or more of PbO, Bi203, ZnO, CuO, CdO, and Fe203, as well as minor amounts of refining agents (As203, Sb203) and decolourising oxides (Mn02).

In GB-A-2121783 is described glass compositions with refractive indices of 1.590 - 1.605 and Abbe numbers of 40.5 - 42.0, consisting essentially of 60 - 75 wt.% Si02, 10 - 15 wt.% alkali metal oxides, 5 - 12 wt.% alkaline earth metal oxides (pref. CaO) and 12 - 18 wt.% Ti02, and optionally minor amounts of refining and colouring agents.

In Chemical Abstracts, Vol. 100, No. 20, ref. no. 160937X, is described glass compositions with refractive indices of 1.58 - 1.66 and Abbe numbers of 35 - 50, containing 47 - 70 wt.% Si02, 5.5 - 21 wt.% Li20, 2 - 30 wt.% K20, 0 - 30 wt.% Na20 and 9.5 - 30 wt.% Ti02.

In Journal of Research of the National Bureau of Standards Vol. 61, No. 2, August 1958, pages 89-94 is described glass compositions with refractive indices of 1.5184 - 1.8005 and Abbe numbers of 23.2 - 51.5, consisting of Si02, Na20 and Ti02.

In EP-A-564802 is described crystal glass compositions containing Si02, alkali metal oxides and Ti02.

It is an object of the present invention to provide a glass composition overcoming these disadvantages, using non-toxic additives, in order to make possible the production of glasses and glass products with favourable production costs, and similar or better aesthetic appearance as lead crystal products, and in particular crystal glasses, based on conventional alkali silicate glass compositions, with high refractive indices in excess of 1.55, high dispersion as measured by an Abbe number of less than 46 and which possess the following properties:-
- freedom from colour, melting temperatures which permit the use of conventional crystal glass furnaces, electrical properties which permit electric melting, a working range to permit hand and machine working, high durability, resistance to solarisation and extremely low tendency to crystallisation.

According to the present invention, there is provided an alkali-silicate glass composition with refractive index of 1.55 or greater, and Abbe number less than 46, suitable for the manufacture of crystal glass comprising by weight Si0₂ 45-65%, M₂0 12-23%, Bi₂0₃ and Ti0₂ present in a total amount up to 30% by weight and Ti0₂ present up to 20% by weight, where M=Na, K or Li.

Minor additives up to 12% by weight in total may be included in the composition, to obtain specific characteristics for the melting and forming process, and for the appearance of the glass and its product.

If desired, the crystal glass can additionally contain, as refining agents, one or more of antimony trioxide, arsenic trioxide, or cerium oxide, in a total amount up to 1% by weight. Furthermore, decolourising compounds such as one or more of Ni0₂, Nd₂0₃ or Mn0, may also be included in the composition.

We have found that by the addition of bismuth compounds to an alkali-silicate glass, the refractive index and the dispersion can be increased more than can be achieved by similar additions of lead on both a weight % and mol % basis. We have found also that the addition of bismuth confers a long working range, compatible with hand working. Moveover, the glasses melt in a temperature range similar to, or slightly lower than, the lead-containing glasses with similar amounts of additives.

Bismuth compounds are, however, more expensive than lead compounds, and therefore the raw materials costs of the bismuth glasses are higher than those of lead glasses. We have found, therefore, that it is possible to replace some of the bismuth by titanium, with a consequent improvement in both the refractive indices and dispersions, and a reduction in raw materials costs. Titanium is added most conveniently using titania, but other compounds may be used. The working range of the titanium-containing glasses is shorter than that of the bismuth glass, but is still suitable for hand working in the lower titanium range and for machine forming in the higher titanium range.

The minor additives may be used to modify, for example, electrical properties for the glass to be made in electrically heated furnaces, faint colour which may be preferred in a product, and sonority. The minor additives may include one or more of As₂0₃, Sb₂0₃, Mn0, Ni0, Nd₂0₃, Ca0, Zr0₂, Sr0₂, La₂0₃ and Zn0, to provide specific characteristics that may be required for a particular glass, in accordance with the invented composition.

The following table illustrates the compositions, refractive indices and Abbe numbers of glass compositions in accordance with the present invention

**Table**

| Compositions to illustrate the invention | | | | | | | | |
|---|---|---|---|---|---|---|---|---|
| No | Si0₂ | M₂0 | Bi₂0₃ | Ti0₂ | Zn0 | Zr0₂ | La₂0₃ | Other |
| 1 | 59.8 | 20.0 | 15.0 | 5.0 | - | - | - | 0.2 |
| 2 | 57.8 | 20.0 | 10.0 | 8.0 | 5.0 | - | - | 0.2 |
| 3 | 59.8 | 20.0 | 10.0 | 10.0 | - | - | - | 0.2 |
| 4 | 59.8 | 20.0 | 5.0 | 15.0 | - | - | - | 0.2 |
| 5 | 58.3 | 17.5 | 11.0 | 8.0 | - | - | 5.0 | 0.2 |
| 6 | 58.8 | 18.0 | 12.0 | 7.0 | - | - | 4.0 | 0.2 |

**Table**

| Refractive indices and Abbe numbers of the illustrative glass | | |
|---|---|---|
| No. | Refractive Index Nd | Abbe Number Vd |
| 1 | 1.560 | 43.5 |
| 2 | 1.570 | 42.5 |
| 3 | 1.566 | 42.0 |
| 4 | 1.575 | 39.5 |
| 5 | 1.572 | 43.0 |
| 6 | 1.568 | 44.1 |

It is found that the glass compositions, according to the invention, are amenable to melting in conventional furnaces in the industry, have a working range to permit the forming of crystal glass products by existing processes, are resistant to solarisation, to attack by the environment, and resistant to the leaching of components of the glass into the contents of containers made from them.

Oxides, hydroxides, carbonates and other oxide-forming compounds, may be used as the raw materials to prepare the glass compositions according to the invention.

The invention also includes articles, particularly crystal glassware, manufactured from the inventive glass compositions.

## Claims

1. An alkali-silicate glass composition with refractive index of 1.55 or greater, and Abbe number less than 46, suitable for the manufacture of crystal glass, comprising by weight Si0₂ 45-65%, M₂0 12-23%, Bi₂0₃ and Ti0₂ present in a total amount up to 30% by weight and Ti0₂ present up to 20% by weight, where M=Na, K or Li.

2. A glass composition according to Claim 1, additionally containing one or more of Al₂0₃, Mn0, Ni0, Nd₂0₃, Zn0, Sr0, CaO, Zr0₂ and La₂0₃, in total amount up to 12% by weight.

3. A glass composition according to Claim 1 or Claim 2, additionally containing, as refining agents, one or more of antimony trioxide, arsenic trioxide or cerium oxide, in total amount up to 1% by weight.

4. A glass composition according to any preceding Claim, additionally containing, as decolourising compounds, one or more of Ni0, Nd₂0₃ or Mn0 up to 0.1% by weight.

5. Articles, particularly crystal glassware, manufactured from a glass composition as defined in any of the preceding Claims.

## Patentansprüche

1. Alkalisilikat-Glaszusammensetzung mit einem Brechungsindex von 1,55 oder größer und einer Abbe'schen Zahl von weniger als 46, die für die Herstellung von Kristallglas geeignet ist, wobei die Glaszusammensetzung 45 bis 65 Gew.% SiO₂, 12 bis 23 Gew.% M₂O, Bi₂O₃ und TiO₂ mit einem Gesamtgehalt bis 30 Gew.% aufweist, wobei bis zu 20 Gew.% TiO₂ vorhanden ist und wobei M=Na, K oder Li ist.

2. Glaszusammensetzung nach Anspruch 1, welche zusätzlich eine oder mehrere der Verbindungen Al₂O₃, MnO, NiO, Nd₂O₃, ZnO, SrO, CaO, ZrO₂ und La₂O₃ mit einem Gesamtgehalt bis 12 Gew.% enthält.

3. Glaszusammensetzung nach Anspruch 1 oder 2, welche zusätzlich als Läuterungsmittel eine oder mehrere der Verbindungen Antimontrioxid, Arsentrioxid oder Ceroxid mit einem Gesamtgehalt bis 1 Gew.% enthält.

4. Glaszusammensetzung nach einem der vorhergehenden Ansprüche, welche zusätzlich als Entfärbungsmittel eine oder mehrere der Verbindungen NiO, Nd₂O₃ oder MnO mit einem Gehalt bis 0,1 Gew.% enthält.

5. Gegenstände, insbesondere Kristallglaswaren, welche aus einer Glaszusammensetzung nach einem der vorhergehenden Ansprüche gefertigt worden sind.

## Revendications

1. Composition de verre au silicate alcalin présentant un indice de réfraction supérieur ou égal à 1,55 ; et un nombre d'Abbé inférieur à 46, appropriée pour la fabrication de cristalleries, comprenant 45-65% en poids de SiO₂, 12-23% de M₂O, jusqu'à 30% en poids de l'ensemble Bi₂O₃ et TiO₂ et jusqu'à 20% en poids de TiO₂, où M = Na, K ou Li.

2. Composition de verre selon la revendication 1, contenant, en outre, un ou plusieurs éléments choisis parmi Al₂O₃, MnO, NiO, Nd₂O₃, ZnO, SrO, CaO, ZrO₂ et La₂O₃, à raison d'une quantité totale représentant jusqu'à 12% en poids.

3. Composition de verre selon la revendication 1 ou la revendication 2, contenant en outre, comme agents d'affinage, un ou plusieurs éléments choisis parmi l'oxyde antimonique, l'oxyde arsénieux, l'oxyde cérique, à raison d'une quantité totale représentant jusqu'à 1% en poids.

4. Composition de verre selon l'une quelconque des revendications précédentes, contenant, en outre, comme composés décolorants, un ou plusieurs éléments choisis parmi NiO, Nd₂O₃ ou MnO, jusqu'à 0,1 % en poids.

5. Articles, en particulier, verreries en cristal fabriquées à partir d'une composition de verre, selon l'une quelconque des revendications précédentes.
